# EUROPÄISCHE PATENTSCHRIFT

(11) **EP 2 766 225 B1**
(45) Veröffentlichungstag und Bekanntmachung des Hinweises auf die Patenterteilung: **01.03.2017**
(21) Anmeldenummer: 12801446.1
(22) Anmeldetag: 08.10.2012
(51) Int. Cl.: B60R 5/04, B60R 13/02

(54) **VERKLEIDUNGSBAUGRUPPE FÜR EIN KRAFTFAHRZEUG MIT LADERAUMABDECKUNG**
TRIM ASSEMBLY FOR A MOTOR VEHICLE HAVING A LUGGAGE COMPARTMENT COVER
ENSEMBLE HABILLAGE POUR UN VÉHICULE AUTOMOBILE POURVU D'UN ÉLÉMENT DE RECOUVREMENT D'UN ESPACE DE RANGEMENT

(30) Priorität: 14.10.2011 DE 202011051641 U
(43) Veröffentlichungstag der Anmeldung: 20.08.2014
(73) Patentinhaber: Brose Fahrzeugteile GmbH & Co. Kommanditgesellschaft, Coburg, Max-Brose-Straße 1 96450 Coburg (DE)
(72) Erfinder: DIETZEL, Renee, 96242 Sonnefeld (DE)
(74) Vertreter: Daniel, Ulrich W.P.
(86) Internationale Anmeldenummer: PCT/EP2012/004213
(87) Internationale Veröffentlichungsnummer: WO 2013/053456

(56) Entgegenhaltungen:
- EP-A1- 1 787 864
- EP-A2- 1 225 094
- DE-C1- 19 854 772
- DE-U1-202007 018 359

## Beschreibung

Die vorliegende Erfindung betrifft eine Verkleidungsbaugruppe für ein Kraftfahrzeug nach dem Oberbegriff des Anspruchs 1 sowie eine Kraftfahrzeugbaugruppe mit einer solchen Verkleidungsbaugruppe.

Eine Verkleidungsbaugruppe umfasst unter anderem ein Verkleidungsteil zur Verkleidung eines Karosserieteils des Kraftfahrzeugs. So kann ein solches Verkleidungsteil beispielsweise Teil einer aus Kunststoff gefertigten Verkleidung für den heckseitigen Innenraum eines Kraftfahrzeugs sein und insbesondere zur wenigstens partiellen Verkleidung einer D-Säule im Innenraum des Kraftfahrzeugs ausgebildet und vorgesehen sein.

Es ist bekannt, an oder in derartigen Verkleidungsteilen Führungsbereiche auszubilden, entlang derer eine Laderaumabdeckung für einen Laderaum des Kraftfahrzeugs geführt ist. Das Öffnen und Schließen von Laderaumabdeckungen erfolgt hierbei über eine motorische Antriebseinrichtung. Mittels dieser Antriebseinrichtung ist üblicherweise eine wickelbare Laderaumabdeckung entgegen einer Rückstellkraft in Richtung einer geschlossenen Lage überführbar. Hierzu kann die Laderaumabdeckung beispielsweise von einem Wickelelement abgewickelt und durch die Antriebseinrichtung in einem gespannten Zustand über den zu überdeckenden Laderaum in Richtung der Heckklappe des Kraftfahrzeugs gezogen werden. Zum Überführen in eine geöffnete Position der Laderaumabdeckung kann gleichermaßen die motorische Antriebseinrichtung dienen und/oder lediglich ein Freigeben einer Arretierung vorgesehen sein. Das Rückführen der Laderaumabdeckung in eine (weiter) geöffnete Position kann dabei infolge der an der Laderaumabdeckung angreifende Rückstellkraft erfolgen oder durch diese zumindest erleichtert werden.

An dem Verkleidungsteil ist ein Führungselement vorgesehen, das eine Führungsbahn für die Laderaumabdeckung vorgibt. Das Führungselement ist beispielsweise mit dem Verkleidungsteil ausgeformt oder daran als separates Bauteil fixiert.

Zur Verstellung der Laderaumabdeckung entlang der vorgegebenen Führungsbahn sind als Teil der Antriebseinrichtung verstellbare Verstellelemente vorgesehen, die sich zum Öffnen und Schließen der Laderaumabdeckung verstellen lassen. Hierbei handelt es sich beispielsweise um einen entlang des Führungselements translatorisch verstellbaren und mit einem Abschnitt der Laderaumabdeckung verbindbaren Mitnehmer. Als weiteres Verstellelement wird regelmäßig noch mindestens ein (starres oder verstellbares) Umlenkelement, insbesondere eine Umlenkrolle vorgesehen, über das ein längserstrecktes Zugmittel, wie z. B. ein Seilzug, zur Verstellung der Laderaumabdeckung umgelenkt wird. Über ein Umlenkelement wird das an dem Mitnehmer angreifende Zugmittel innerhalb des Verkleidungsteils umgelenkt, um eine Antriebskraft von einem Antriebsmotor der motorischen Antriebseinrichtung auf die Laderaumabdeckung für deren Schließen und/ oder Öffnen zu übertragen.

Grundsätzlich ist es bereits bekannt, dass Verstellelemente der Antriebseinrichtung, insbesondere ein translatorisch verstellbarer Mitnehmer, derart an dem Führungselement gelagert sind, dass etwaige auf das Verstellelement wirkende Kräfte, die z. B. bei einer bestimmungsgemäßen Verstellung der Laderaumabdeckung oder durch fehlerhafter Handhabung der Laderaumabdeckung verursacht werden, zunächst ausschließlich von dem Führungselement aufgenommen werden, da sich das Verstellelement unmittelbar ausschließlich an dem Führungselement abstützt. Dokument DE19854772 offenbart eine Verkleidungsbaugruppe gemäß dem Oberbegriff des Anspruchs 1.

Es ist daher Aufgabe der vorliegenden Erfindung, eine Verkleidungsbaugruppe der eingangs genannten Art weiter zu verbessern und insbesondere hinsichtlich des von ihr eingenommenen Bauraums zu optimieren.

Diese Aufgabe wird mit einer Verkleidungsbaugruppe gemäß dem Anspruch 1 gelöst.

Bei einem Verstellelement handelt es vorzugsweise um ein Teil der Antriebseinrichtung, das insbesondere beim bestimmungsgemäßen Verstellen der Laderaumabdeckung über die Antriebseinrichtung mit einer Kraft beaufschlagt wird. Hierunter fallen insbesondere Teile der Antriebseinrichtung, die für das Öffnen oder Schließen der Laderaumabdeckung selbst verstellt werden (wie z.B. ein verstellbarer Mitnehmer) oder an denen sich andere, für das Öffnen oder Schließen der Laderaumabdeckung zu verstellende Teile der Antriebseinrichtung abstützen (wie z.B. ein Umlenkelement, über das ein zur Verstellung eines Mitnehmers angetriebener Seilzug umgelenkt wird).

Auf diese Weise kann sich das an dem Führungselement gehaltene Verstellelement an dem im Vergleich zu dem Verkleidungsteil deutlich steiferen Karosserieteil abstützen, wenn das Verstellelement zumindest im Bereich der Aussparung direkt mit dem Karosserieteil in Kontakt steht. Es ist folglich wenigstens ein Bereich des Führungselements vorgesehen, in dem kein Abschnitt des Führungselements zwischen Verstellelement und Karosserieteil vorliegt und sich somit das Verstellelement - zumindest lokal - direkt an dem Karosserieteil abstützen kann. Die der Karosserie zugewandte Seite des Führungselements ist hier wenigstens teilweise geöffnet, so dass im zusammengebauten Zustand das Abstützen des Verstellelements an dieser Seite wenigstens lokal durch die Fahrzeugkarosserie übernommen wird.

Das Führungselement kann damit wenigstens lokal - im Bereich der Aussparung - in ihren Abmessungen verringert werden, so dass für das Führungselement weniger Bauraum zur Verfügung gestellt werden muss. Dies wirkt sich besonders vorteilhaft bei einem Verkleidungsteil aus, das ein Karosserieteil in Richtung des Innenraums eines Kraftfahrzeugs zumindest teilweise verkleidet und durch die Abmessungen des Führungselements ein minimaler Abstand zwischen Verkleidungsteil und Karosserieteil vorgegeben ist. So kann beispielsweise in einer Ausführungsform durch das teilweise in Richtung auf das Karosserieteil hin offene Führungselement das Verkleidungsteil im heckseitigen Bereich des Kraftfahrzeugs mit geringerem Abstand zu dem Karosserieteil fixiert werden, wodurch zumindest geringfügig auch der zur Verfügung stehende Laderaum im Heck des Kraftfahrzeugs vergrößert wird.

In einer vorteilhaften Ausführungsvariante ist die Aussparung derart dimensioniert, dass, bei bestimmungsgemäßer Montage der Verkleidungsbaugruppe, das Verstellelement im Bereich der Aussparung zumindest in einer Raumrichtung ausschließlich durch das Karosserieteil abgestützt wird. Beispielsweise ist hierfür ein längserstrecktes Führungselement - vorzugsweise in der Form einer Führungsschiene - in einem Bereich mit einer kanalförmigen Aussparung versehen, so dass ein in dem Führungselement längsverschieblich geführter Mitnehmer an der durch die Aussparung definierten offenen Seite unmittelbar an dem Karosserieteil anliegen kann und entlang des Karosserieteils geführt wird.

In einer darauf basierenden Weiterbildung kann auch vorgesehen sein, dass die Aussparung in dem Führungselement derart dimensioniert ist, dass das an dem Führungselement gehaltene Verstellelement (z. B. in Form eines Mitnehmers) in zwei zueinander senkrechten Raumrichtungen ausschließlich durch das Karosserieteil abgestützt wird, wenn das Verstellelement im Bereich der Aussparung vorliegt. So kann hierfür ein im Querschnitt L-förmiger Abschnitt an dem Karosserieteil vorgesehen sein, an dem das Führungselement mit dem daran angeordneten Verstellelement bestimmungsgemäß positioniert wird. Über eine Aussparung, die zu beiden Schenkeln dieser L-Form hin offen ist, kann folglich ein Verstellelement im montierten Zustand in zwei zueinander senkrechten Raumrichtungen ausschließlich an dem Karosserieteil anliegen und von diesem abgestützt werden.

In einer bevorzugten Ausführungsform handelt es sich bei dem Verstellelement, das über die Aussparung an dem Karosserieteil anliegen kann, um einen zur Verstellung der Laderaumabdeckung entlang des Führungselements verstellbaren und mit der Laderaumabdeckung verbindbaren Mitnehmer. Hier ist der Mitnehmer nach bestimmungsgemäßer Montage der Verkleidungsbaugruppe an das Karosserieteil zumindest im Bereich der wenigstens einen Aussparung unmittelbar an dem Karosserieteil angeordnet. Der Mitnehmer liegt bei einer Verstellung zum Öffnen oder Schließen der Laderaumabdeckung zumindest in einem Abschnitt einer vorgegebenen Verstellbahn an dem Karosserieteil an und wird unmittelbar an dem Karosserieteil entlang verstellt.

In einem solchen Fall ist das Führungselement derart ausgebildet, dass der Mitnehmer im Bereich der wenigstens einen Aussparung zumindest in einer ersten Raumrichtung - vorzugsweise quer zu einer Verstellrichtung des Mitnehmers - abgestützt ist und nach bestimmungsgemäßer Montage der Verkleidungsbaugruppe an das Karosserieteil in einer hierzu unterschiedlichen zweiten Raumrichtung - vorzugsweise quer zu der ersten Raumrichtung und quer zu der Verstellrichtung des Mitnehmers - von dem Karosserieteil abgestützt werden kann.

In einer Ausführungsvariante ist das Führungselement zur Anbringung an einer Anlagefläche des Karosserieteils ausgebildet und vorgesehen und zwar derart, dass sich das Führungselement nach bestimmungsgemäßer Montage der Verkleidungsbaugruppe an der Anlagefläche abstützen kann und der Mitnehmer bei einer Verstellung entlang des Führungselements zumindest im Bereich der wenigstens einen Aussparung über diese an derselben Anlagefläche an dem Karosserieteil anliegen kann. Das Führungselement liegt somit hier selbst mit einem oder mehreren Abschnitten unmittelbar an der Anlagefläche des Karosserieteils an und stellt über die Aussparung sicher, dass auch der Mitnehmer zumindest im Bereich der Aussparung sich an derselben Anlagefläche des Karosserieteils abstützen und Kräfte in das Karosserieteil einleiten kann, ohne in diesem Bereich in Kontakt mit dem Führungselement zu stehen.

Grundsätzlich sei noch darauf hingewiesen, dass es in einer Ausführungsvariante selbstverständlich möglich ist, dass mehrere, bezogen auf die Führungsbahn axial räumlich voneinander beabstandete und hintereinander angeordnete Aussparungen, insbesondere kanalförmig ausgebildete Aussparungen, an dem Führungselement vorgesehen sein können, über die jeweils ein Mitnehmer abschnittsweise unmittelbar an dem Karosserieteil anliegen kann.

In einer Ausführungsform weist das Führungselement einen ersten Bereich mit der wenigstens einen Aussparung und darüber hinaus wenigstens einen zweiten Bereich auf, in dem der Mitnehmer an dem Führungselement in einer Montageposition gehalten ist, bevor das Führungselement - mit oder ohne das Verkleidungsteil - an dem Karosserieteil angebracht wird.

Der Mitnehmer ist somit in dieser Ausführungsvariante an der Seite des Führungselements, die nach bestimmungsgemäßer Montage der Verkleidungsbaugruppe dem Karosserieteil zugewandt ist, durch das Führungselement abgestützt und ist z. B. in diesem Bereich von wenigstens drei Seiten eingefasst. In einem derart geschlossenen Bereich des Führungselements - im Unterschied zu einem mit einer Aussparung versehenen offenen Bereich - kann somit der Mitnehmer in einfacher Weise in einer Montageposition formschlüssig gehalten werden, bevor das Führungselement an dem Karosserieteil angebracht wird. Das Führungselement mit dem in dem zweiten Bereich gehaltenen Mitnehmer kann somit vormontiert angeliefert werden, da hier der Mitnehmer vor Herausfallen geschützt in dem zweiten Bereich vorliegt. Nach der Montage kann der Mitnehmer bei Betätigung der Laderaumabdeckung bzw. der zugehörigen Antriebseinrichtung aus dem zweiten Bereich heraus in den ersten Bereich des Führungselements verstellt werden. In dem ersten Bereich mit der Aussparung ist eine unmittelbare Abstützung in einer Raumrichtung durch das Karosserieteil bereitgestellt. In einer Ausführungsform ist der Mitnehmer in diesem ersten Bereich nur noch von zwei Seiten durch das Führungselement eingefasst und liegt an einer dritten Seite an dem Karosserieteil an.

In einer möglichen, hierauf basierenden Weiterbildung weist ein Führungselement einen Führungskanal auf, der an zwei sich gegenüberliegenden Enden des Führungselements derart ausgebildet ist, dass der Mitnehmer in dem Führungskanal von drei Seiten eingefasst ist. Der Querschnitt des Führungskanals ist hier folglich beispielsweise U-förmig, wobei die beiden Schenkel der U-Form durch sich gegenüberliegende Seitenwandungen gebildet sind. In einem zwischen diesen beiden geschlossenen Bereichen des Führungselements ist ein mittiger offener Bereich mit einer durchgängigen längserstreckten Aussparung vorgesehen. In dem offenen Bereich ist der dort befindliche Mitnehmer lediglich von den beiden sich quer zur Verstellrichtung gegenüberliegenden Seitenwandungen eingefasst. An der dazwischen liegenden und dem Karosserieteil zugewandten offenen Seite liegt der Mitnehmer unmittelbar an dem Karosserieteil an und ist in diesem Abschnitt seines zugelassenen Verstellweges unmittelbar von dem Karosserieteil abgestützt. An einem der geschlossenen Enden kann der Mitnehmer folglich formschlüssig in einer Montageposition bereits gehalten sein, bevor das Führungselement an dem Karosserieteil angebracht wird. Bei bestimmungsgemäßem Gebrauch ist der Mitnehmer aus dieser Montageposition heraus verstellbar und in den Bereich des Führungselements mit der Aussparung überführbar.

Bevorzugt ist der Mitnehmer aus einem Kunststoffmaterial und das Karosserieteil aus einem Metall hergestellt. Hier kann folglich ein Kunststoff-Mitnehmer im Bereich der Aussparung unmittelbar an dem metallischen Karosserieteil entlang gleiten, woraus durch die Gleitpaarung Kunststoff - Metall für den Mitnehmer verbesserte Gleiteigenschaften resultieren können.

Durch ein Führungselement, bei der die wenigstens eine Aussparung in Richtung auf das Karosserieteil für einen entlang des Führungselements gleitend geführten Mitnehmer vorgesehen ist, kann in relevantem Umfang Material an dem Führungselement eingespart werden. Darüber hinaus zeichnet sich in einem solchen Fall das Führungselement gegenüber einem Führungselement ohne derartige Aussparung durch eine geringere Formstabilität aus. Dies ist insbesondere im Hinblick auf eine leichtere Anpassung des Führungselements an die genauer gefertigte Karosserie bei deren Montage vorteilhaft. So kann das weniger formstabile Führungselement, wie zum Beispiel eine Führungsschiene, leichter an vorgegebenen Befestigungsstellen des Karosserieteils montiert bzw. besser hierzu ausgerichtet werden.

Alternativ oder ergänzend kann vorgesehen sein, dass ein Umlenkelement, insbesondere ein starres Umlenkteil oder eine Umlenkrolle als Verstellelement über wenigstens eine Aussparung unmittelbar an dem Karosserieteil anliegen kann. So kann über das Führungselement eine Aussparung bereitgestellt sein, an der eine unmittelbare Anbindung eines (z. B. drehbar gelagerten) Umlenkelements an das Karosserieteil möglich ist, wobei das Umlenkelement innerhalb des Führungselements aufgenommen ist. Das Umlenkelement kann somit insbesondere in einem Anlieferungszustand an dem Führungselement gehalten sein und zusammen mit dem Führungselement an dem Karosserieteil angeordnet werden. Das Umlenkelement ist dann im Anschluss an dem Karosserieteil derart fixierbar, dass das Umlenkelement innerhalb des Führungselements - gegebenenfalls drehbar - gelagert ist und sich - bei einer drehbaren Lagerung entlang seiner Drehachse - unmittelbar an dem Karosserieteil abstützt. In Richtung des Karosserieteils an dem Umlenkelement angreifende Kräfte, z. B. entlang einer Drehachse eines drehbar gelagerten Umlenkelements, werden somit unmittelbar in das Karosserieteil eingeleitet, ohne dass diese Kräfte von dem Umlenkelement in dem ausgesparten Bereich auf das Führungselement übertragen werden.

Bevorzugt wird mit einer erfindungsgemäßen Verkleidungsbaugruppe eine Kraftfahrzeugbaugruppe gebildet, die zusätzlich das Karosserieteil umfasst, an dem das Verkleidungsteil angeordnet ist und das - als Teil des Fahrzeugrohbaus - in Richtung eines Innenraums des Kraftfahrzeugs zumindest teilweise von dem Verkleidungsteil verkleidet ist.

In einer Ausführungsvariante weist das Karosserieteil hierbei wenigstens einen Anschlagabschnitt auf, an dem der entlang des Führungselements gleitend geführte Mitnehmer anschlagen kann und der eine weitere Verstellbewegung des Mitnehmers über den Anschlagabschnitt hinweg verhindert. Ein derartiger, von dem Karosserieteil ausgebildeter Anschlagabschnitt kann somit eine Verstellbewegung des Mitnehmers stoppen und einen für den Mitnehmer zugelassenen Verstellweg begrenzen. Der Anschlagabschnitt kann hierbei durch die eine Aussparung oder eine von mehreren Aussparungen an dem Führungselement in einen von dem Führungselement ausgebildeten Führungskanal für den Mitnehmer hineinragen.

In diesem Zusammenhang sei auch darauf hingewiesen, dass in einer Variante der Mitnehmer durch die Aussparung hindurch von dem Führungselement zumindest abschnittsweise hervorstehen kann, um im montierten Zustand zumindest im Bereich der Aussparung an dem Karosserieteil anzuliegen und unmittelbar gleitend an dem Karosserieteil entlang geführt zu werden. Selbstverständlich ist es auch möglich, dass ein Abschnitt des Karosserieteils über die an dem Führungselement bereitgestellte Aussparung in den Führungskanal hineinragt und der Mitnehmer entlang dieses hineinragenden Abschnitts verstellbar ist. Ein solcher hineinragender Abschnitt stellt hierbei folglich eine Gleitfläche für den Mitnehmer bereit, die der Mitnehmer auf dem zugelassenen Verstellweg zum Verstellen der Laderaumabdeckung passiert.

Weitere Vorteile und Merkmale der vorliegenden Erfindung werden auch durch die nachfolgende Beschreibung anhand der Figuren deutlich werden.

Es zeigen:
- Fig. 1: eine perspektivische Ansicht eines Ausführungsbeispiels einer erfindungsgemäßen Verkleidungsbaugruppe mit einem Verkleidungsteil, das im Bereich der D-Säule eines Kraftfahrzeugs angeordnet ist;
- Fig. 2A - 2B: Schnittansichten der Verkleidungsbaugruppe der Figur 1 an voneinander beabstandeten Stellen entlang einem Führungselement der Verkleidungsbaugruppe;
- Fig. 3: eine perspektivische Ansicht einer Antriebseinrichtung zum Verstellen einer Laderaumabdeckung.

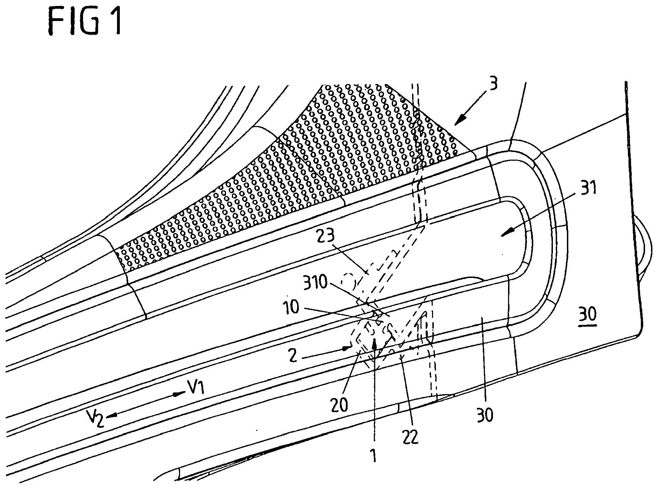

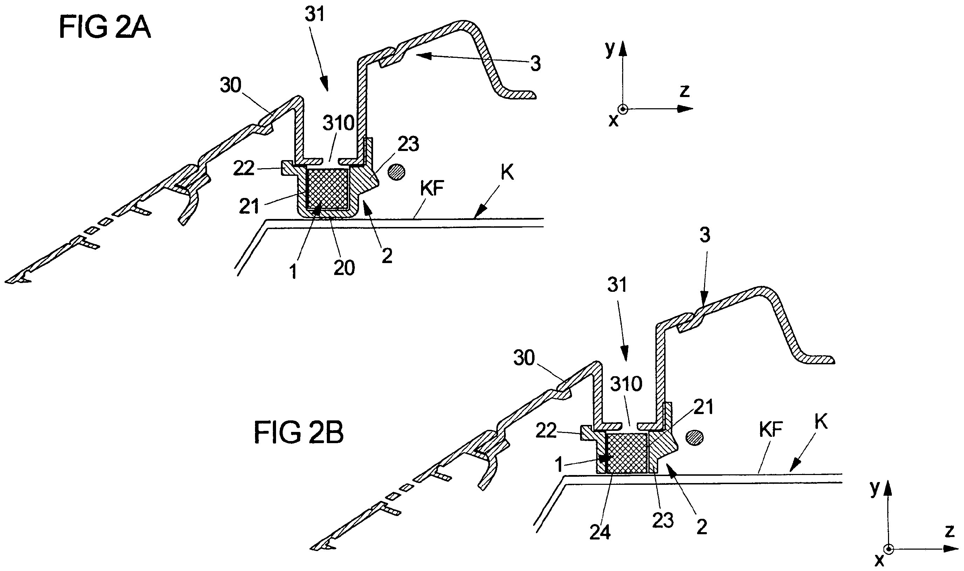

Die Figuren 1, 2A und 2B zeigen in unterschiedlichen Ansichten eine Kraftfahrzeugbaugruppe mit einem zum Fahrzeugrohbau zählenden Karosserieteil K sowie einer Verkleidungsbaugruppe, die durch ein üblicherweise aus Kunststoff gefertigtes Verkleidungsteil 3, ein Führungselement 2 und einen entlang des Führungselements 2 längs verschieblich bzw. translatorisch verstellbar gelagerten Mitnehmer 1 gebildet wird. Das Verkleidungsteil 3 dient dabei im vorliegenden Fall insbesondere der Verkleidung des Karosserieteils K im Bereich der D-Säule des Kraftfahrzeugs und damit im Bereich des Hecks.

In diesem Heckbereich ist vorliegend eine hier nicht dargestellte, motorisch verstellbare Laderaumabdeckung vorgesehen, die in bekannter Weise zur Überdeckung eines Laderaums des Kraftfahrzeugs durch eine automatische oder manuelle Betätigung einer motorischen Antriebseinrichtung geschlossen werden kann. Zur gleichmäßigen, möglichst störungsfreien Verstellung der Laderaumabdeckung sind auf beiden sich quer zu einer Fahrzeuglängsachse gegenüberliegenden Seiten eines Laderaums im Wesentlichen spiegelbildlich ausgebildete Teile einer Antriebseinrichtung vorgesehen, so dass die sich gegenüberliegenden Seiten der Laderaumabdeckung parallel zueinander über je einen Mitnehmer verlagert werden.

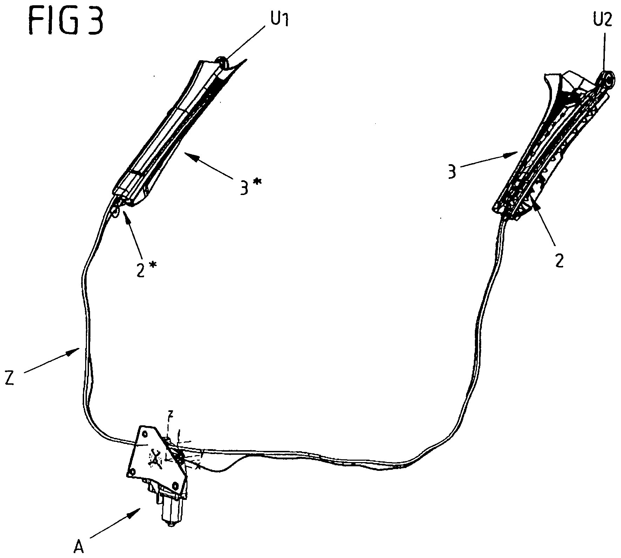

Ein Beispiel für eine Antriebseinrichtung A ist in der Figur 3 gezeigt. Diese Antriebseinrichtung A weist ein Zugmittel Z in Form eines Seilzuges auf, das über zwei Umlenkelemente in Form zweier Umlenkrollen U1, U2 zweimal um etwa 180° umlenkt ist. Über dieses Zugmittel Z sind zwei sich gegenüberliegend angeordnete und jeweils in einem Führungselement 2, 2* eines Verkleidungsteils 3, 3* gleitend geführte Mitnehmer zur einer Verstellung antreibbar. Die zu verstellende Laderaumabdeckung ist mit beiden Mitnehmern verbindbar, so dass eine Verstellung der Mitnehmer zu einem Öffnen oder Schließen der hier nicht dargestellten Laderaumabdeckung führt.

Die Laderaumabdeckung ist hierfür insbesondere mit dem in den Figuren 1 und 2A - 2B dargestellten Mitnehmer 1 verbindbar, beispielsweise über eine lösbare Clipsverbindung, oder ist dauerhaft an diesem festgelegt. Zur Verbindung mit einem Abschnitt der Laderaumabdeckung sind an dem Mitnehmer 1 über eine Verbindungsöffnung 310 in dem Verkleidungsteil 3 zugängliche Befestigungsmittel 10 vorgesehen.

Wird der Mitnehmer 1 von einem Antriebsmotor, mit dem er beispielsweise über ein längserstrecktes Zugmittel Z, hier einen Seilzug, in Verbindung steht, zu einer Verstellbewegung in eine von zwei zueinander entgegengesetzten Verstellrichtungen V₁, V₂ angetrieben, wird ein mit dem Mitnehmer 1 verbundener Abschnitt der Laderaumabdeckung mitbewegt. Auf diese Weise wird durch eine Verstellbewegung des Mitnehmers 1 in die erste Verstellrichtung V₁ die Laderaumabdeckung zumindest teilweise oder vollständig geschlossen und bei einer Verstellbewegung in die zweite Verstellrichtung V₂ vollständig oder zumindest teilweise geöffnet.

Anstelle einer Antriebseinrichtung A mit einem Zugmittel Z können ein Mitnehmer 1 oder mehrere Mitnehmer insbesondere auch über einen Spindelantrieb oder mittels eines sogenannten Steigkabels zu einer Verstellbewegung angetrieben werden.

Das den Verstellweg für den Mitnehmer 1 definierende und damit die Führungsbahn für die Laderaumabdeckung vorgebende Führungselement ist in dem gezeigten Ausführungsbeispiel vollständig zwischen dem Verkleidungsteil 3 und dem metallischen Karosserieteil K angeordnet. Das Führungselement 2 (hier z. B. in Form einer hinter der dem Verkleidungsteil 3 anzubringenden Führungsschiene) befindet sich folglich in einem zwischen dem Karosserieteil K und dem Verkleidungsteil 3 gebildeten Hohlraum, so dass das Führungselement 2 von dem Innenraum des Kraftfahrzeugs getrennt ist.

An einer dem Fahrzeuginnenraum zugewandten Innenseite 30 des Verkleidungsteils 3 ist ein längserstreckter Führungsbereich 31 ausgebildet, an dem entlang der mit dem Mitnehmer 1 verbundene Abschnitt der Laderaumabdeckung geführt wird. Der Führungsbereich 31 ist gegenüber den angrenzenden Bereichen des Verkleidungsteils 3 zurückgesetzt ausgebildet und stellt sich damit im Wesentlichen kanalförmig dar. An seiner Basis ist eine längs entlang der von dem Führungselement 2 vorgegebenen Führungsbahn verlaufende Verbindungsöffnung 310 vorgesehen. Über diese Verbindungsöffnung 310 ist eine Verbindung der auf der Innenseite 30 des Verkleidungsteils 3 entlang geführten Laderaumabdeckung mit dem hinter dem Verkleidungsteil 3 verstellbar geführten Mitnehmer 1 möglich.

Die Verstellung des Mitnehmers 1 und damit das Öffnen und/oder Schließen der Laderaumabdeckung erfolgt vorliegend über eine motorische Antriebseinrichtung (nicht dargestellt), die über einen Seilzug verstellbar gelagerte Verstellelemente, als Teil der Antriebseinrichtung, verstellt, um eine Antriebskraft auf die Laderaumabdeckung übertragen zu können. Zusätzlich zu dem längsverschieblich gelagerten und mit dem Seilzug verbundenen Mitnehmer 1 sind unter anderem noch weitere Verstellelemente in Form drehbar gelagerter Umlenkrollen vorgesehen. Eine solche Umlenkrolle lenkt in an sich bekannter Weise den Seilzug hinter der Verkleidung z. B. um ca. 180° um, so dass der Seilzug Platz sparend hinter der Verkleidung und insbesondere entlang dem Führungselement 2 geführt werden kann.

Der hier in den Figuren 1, 2A und 2B ersichtliche Mitnehmer 1 ist vorliegend in einem von dem Führungselement 2 gebildeten Führungskanal 21 gleitend geführt. Dieser Führungskanal 21 weist in einem in der Figur 2A ersichtlichen zweiten Bereich einen im Wesentlichen U-förmigen Querschnitt auf. Die einzige offene Seite des Führungskanals 21 ist in diesem Bereich der Verbindungsöffnung 310 des Verkleidungsteils 3 zugewandt, so dass der Mitnehmer 1 auch in diesem Bereich mit der Laderaumabdeckung in Verbindung stehen kann.

Der U-förmige Querschnitt des Führungselements 2 wird durch zwei sich gegenüberliegende Seitenwandungen 22, 23 und eine Basis 20 definiert, die die beiden Seitenwandungen 22, 23 quer zur Längserstreckungsrichtung des Führungselements 2 miteinander verbindet. Über die beiden Seitenwandungen 22, 23 und die Basis 20 ist der Mitnehmer 1 in dem in der Figur 2A ersichtlichen zweiten Bereich des Führungselements 2 von Abschnitten des Führungselements von drei Seiten eingefasst. Der Mitnehmer 1 kann sich somit quer zur Längserstreckungsrichtung des Führungselements 2 bzw. quer zu seiner Verstellrichtung V₁, V₂ in zueinander entgegengesetzten Raumrichtungen z, -z an den beiden Seitenwandungen 22, 23 abstützen. In einer senkrecht zu diesen beiden Raumrichtungen z, -z und senkrecht zu der Längserstreckungsrichtung des Führungselements 2 verlaufenden Raumrichtung -y erfolgt eine Abstützung des Mitnehmers 1 durch die Basis 20 des Führungselements 2. Über diese Basis 20 liegt das Führungselement 2 weiterhin unmittelbar an einer Anlagefläche KF des Karosserieteils K an. Das Führungselement 2 stützt sich somit unmittelbar an dem Karosserieteil K ab. Auf den Mitnehmer 1 wirkende Kräfte werden somit in den drei Raumrichtungen -y, z, -z von dem Führungselement 2 aufgenommen und in das Karosserieteil K eingeleitet.

Erfindungsgemäß ist nun vorgesehen, wenigstens einen weiteren, ersten Bereich an dem Führungselement 2 auszubilden, der eine Aussparung 24 aufweist, die zu dem Karosserieteil K hin offen ist und über die ein verstellbares Verstellelement - hier der Mitnehmer 1 - an dem Karosserieteil K unmittelbar anliegen kann. Ein solcher erster Bereich ist beispielhaft in der Figur 2B veranschaulicht.

In diesem Bereich des Führungselements 2 ist die Basis 20 nicht mehr vorhanden, so dass zwischen den beiden sich gegenüberliegenden Seitenwandungen 22, 23 die Aussparung 24 gebildet ist. Über diese Aussparung 24 liegt der Mitnehmer 1 hier flächig an der Anlagefläche KF des Karosserieteils K auf und kann sich hierdurch unmittelbar an dem Karosserieteil K abstützen. Auf den Mitnehmer 1 in Richtung des Karosserieteils K in Raumrichtung -y wirkende Kräfte werden folglich direkt an der Anlagefläche KF in das Karosserieteil K eingeleitet. Eine Aufnahme dieser Kräfte über einen Abschnitt des Führungselements 2 in der Raumrichtung -y ist hier somit nicht vorgesehen. Zwischen dem Mitnehmer 1 und dem Karosserieteil K ist somit kein Abschnitt des Führungselements 2 angeordnet, obwohl der Mitnehmer 1 gleichwohl über die Seitenwandungen 22, 23 gleitend geführt gelagert ist. Der Mitnehmer 1 gleitet hier in direktem Kontakt mit der Anlagefläche KF an dem Karosserieteil K entlang, so dass über die Anlagefläche KF des Karosserieteils K eine Gleitfläche bereitgestellt ist, an der entlang der Mitnehmer 1 zumindest im Bereich der Aussparung 24 bei einer Verstellbewegung entlang wenigstens eines Teils seines vorgegebenen Verstellweges gleiten kann.

Die Aussparung 24 ist hier kanalförmig ausgebildet und erstreckt sich entlang des Führungselements 2. In einer Ausführungsvariante kann sich die Aussparung 24 über einen Großteil oder über die Gänze der durch das Führungselement 2 vorgegebenen Verstellbahn des Mitnehmers 1 erstrecken.

Durch die in der Figur 2B ersichtliche Ausbildung des Führungselements 2 mit einer Aussparung 24 können in dem gezeigten Bereich etwaige Missbrauchskräfte, die in Raumrichtung -y wirken, direkt in den stabileren Rohbau eingeleitet werden. Zudem kann Material an der Führungselement 2 eingespart werden, wodurch auch ein geringerer Bauraum für das Führungselement 2 erforderlich ist. Ferner ist das Führungselement 2 im Bereich der Aussparung 24 weniger formstabil, wodurch eine bessere Anpassung des Führungselements 2 an das genauer gefertigte Karosserieteil K bei Montage des Führungselements 2 am Kraftfahrzeug möglich ist.

Des Weiteren ist der Mitnehmer 1 vorteilhaft aus Kunststoffmaterial hergestellt, so dass dieser auf der Anlagefläche KF des metallischen Karosserieteils K besser, d. h. reibungsärmer, gleiten kann, als an der Basis 20 des Führungselements 2. In diesem Zusammenhang kann auch vorgesehen sein, dass der Mitnehmer 1 als Spritzgussteil hergestellt ist. Alternativ kann der Mitnehmer 1 selbstverständlich aber auch aus einem anderen Material hergestellt und für seine Herstellung ebenso ein Druckgussverfahren, insbesondere Aluminiumdruckguss, Zinkdruckguss oder Magnesiumdruckguss vorgesehen sein.

In dem aus der Figur 2A ersichtlichen zweiten Bereich, der zu dem ersten Bereich der Figur 2B mit der Aussparung 24 axial beabstandet ist, liegt das Führungselement 2 geschlossen vor, so dass der Mitnehmer 1 hier formschlüssig aufgenommen und in dem Führungselement 2 bzw. deren Führungskanal 21 gehalten ist. In diesem geschlossenen Bereich kann demgemäß der Mitnehmer 1 in einer Montageposition gehalten sein, um das Führungselement zusammen mit dem Mitnehmer 3 - und gegebenenfalls zusammen mit dem Verkleidungsteil 3 - an das Karosserieteil K zu montieren. In dem geschlossenen Bereich des Führungselements 2 entsprechend der Figur 2A mit der Basis 20 ist der Mitnehmer 1 vor einem Herausfallen geschützt und kann folglich bereits in dem Führungselement 2 positioniert an das Karosserieteil K montiert werden. Eine Arretierung des Mitnehmers 1 in axialer Richtung wird hierbei vorzugsweise über die bereits mit dem Mitnehmer 1 verbundene motorische Antriebseinrichtung realisiert. Dieses hält den Mitnehmer 1 in einer eingenommenen Position entlang des Führungselements 2 und gestattet nur bei Betätigung des Antriebsmotors eine Verstellung des Mitnehmers 1.

Ein geschlossener Bereich des Führungselements 2 entsprechend der Figur 2A befindet sich vorzugsweise im Bereich eines Endes des Führungselements 2. In diesem Endbereich liegt der Mitnehmer 1 nach der Montage und im Gebrauchszustand vor, wenn die Laderaumabdeckung vollständig geöffnet oder vollständig geschlossen ist. Ein Bereich mit der Aussparung 24, an dem eine unmittelbare Abstützung des Mitnehmers 1 an dem Karosserieteil K bereitgestellt ist, schließt sich dann entlang der für den Mitnehmer 1 durch das Führungselement 2 vorgegebenen Verstellbahn an den Endbereich an.

In einem Übergangsbereich zu der offenen Aussparung 24 hin kann die Basis 20 des Führungselements 2 vorteilhaft eine rampenartige Form aufweisen, so dass sie in einer Verstellrichtung V₁ oder V₂ mit abnehmender Dicke auf die Aussparung 24 zu verläuft. Hierdurch wird ein geschmeidigerer Übergang von einem geschlossenen zu einem offenen Bereich des Führungselements unterstützt und die Laufruhe des Mitnehmers 1 erhöht.

Selbstverständlich ist es auch möglich, mehrere axial zueinander beabstandete geschlossene und offene Bereiche an dem Führungselement 2 anzuordnen, so dass der Mitnehmer 1 bei Betätigung der Laderaumabdeckung über mehrere, aufeinanderfolgende geschlossene und offene Bereiche des Führungselements 2 wandert, z. B. von einem geschlossenen Bereich an einem Ende des Führungselements über einen offenen Bereich mit der Aussparung 24 zu einem geschlossenen Bereich am anderen Ende des Führungselements 2.

Weiterhin kann auch ein Anschlagsabschnitt durch das Karosserieteil K bereitgestellt werden, an dem der Mitnehmer 1 zur Begrenzung seiner Verstellbewegung anschlagen kann. Ein derartiger Anschlagabschnitt kann beispielsweise zapfenförmig in die Aussparung 24 des Führungselements 2 hineinragen.

Weiterhin kann das Führungselement 2 an dem Verkleidungsteil 3 ausgeformt und nicht wie in dem dargestellten Ausführungsbeispiel als separates Bauteil an dem Verkleidungsteil 3 fixiert sein. Alternativ oder ergänzend kann das Führungselement 2 an dem Karosserieteil K fixiert sein.

### Bezugszeichenliste

- 1: Mitnehmer
- 10: Befestigungsmittel
- 2, 2*: Führungselement
- 20: Basis
- 21: Führungskanal
- 22, 23: Seitenwandung
- 24: Aussparung
- 3, 3*: Verkleidungsteil
- 30: Innenseite
- 31: Führungsbereich
- 310: Verbindungsöffnung
- K: Karosserieteil
- KF: Anlagefläche
- V₁, V₂: Verstellrichtung
- A: Antriebseinrichtung
- Z: Zugmittel
- U1, U2: Umlenkrolle

## Patentansprüche

1. Verkleidungsbaugruppe für ein Kraftfahrzeug, mit
- einem Verkleidungsteil (3) zur Verkleidung eines Karosserieteils (K) des Kraftfahrzeugs,
- einem Verstellelement (1), das Teil einer Antriebseinrichtung (A) zum Öffnen und Schließen einer Laderaumabdeckung des Kraftfahrzeugs ist, und
- einem Führungselement (2), das eine Führungsbahn für die Laderaumabdeckung vorgibt und das an dem Verkleidungsteil (3) vorgesehen ist,
wobei das Verstellelement (1) an dem Führungselement (2) gehalten ist,
**dadurch gekennzeichnet, dass**
das Führungselement (2) wenigstens eine Aussparung (24) aufweist, die bei bestimmungsgemäßer Montage der Verkleidungsbaugruppe an das Karosserieteil (K) zu dem Karosserieteil (K) hin offen ist und über die das Verstellelement (1) an dem Karosserieteil (K) anliegen und hieran abgestützt werden kann, indem das Verstellelement (1) zumindest im Bereich der Aussparung (24) direkt mit dem Karosserieteil (K) in Kontakt steht.

2. Verkleidungsbaugruppe nach Anspruch 1, **dadurch gekennzeichnet, dass** die Aussparung (24) derart dimensioniert ist, dass, bei bestimmungsgemäßer Montage der Verkleidungsbaugruppe, das Verstellelement (1) im Bereich der Aussparung (24) zumindest in einer Raumrichtung (-y) ausschließlich durch das Karosserieteil (K) abgestützt wird.

3. Verkleidungsbaugruppe nach Anspruch 1 oder 2, **dadurch gekennzeichnet, dass** das Verstellelement (1) zum Öffnen und Schließen der Laderaumabdeckung verstellbar ist.

4. Verkleidungsbaugruppe nach Anspruch 3, **dadurch gekennzeichnet, dass** das Verstellelement ein zur Verstellung der Laderaumabdeckung entlang des Führungselements (2) verstellbarer und mit der Laderaumabdeckung verbindbarer Mitnehmer (1) ist, und dass die wenigstens eine Aussparung (24) derart an dem Führungselement (2) ausgebildet ist, dass der Mitnehmer (1) nach bestimmungsgemäßer Montage der Verkleidungsbaugruppe an das Karosserieteil (K) zumindest im Bereich der wenigstens einen Aussparung (24) an dem Karosserieteil (K) anliegen kann, wenn der Mitnehmer (1) bestimmungsgemäß entlang des Führungselements (2) verstellt wird.

5. Verkleidungsbaugruppe nach den Ansprüchen 2 und 4, **dadurch gekennzeichnet, dass** das Führungselement (2) derart ausgebildet ist, dass der Mitnehmer (1) im Bereich der wenigstens einen Aussparung (24) zumindest in einer ersten Raumrichtung (z; -z) von dem Führungselement (2) abgestützt ist und nach bestimmungsgemäßer Montage der Verkleidungsbaugruppe an das Karosserieteil (K) in einer hierzu unterschiedlichen zweiten Raumrichtung (-y) ausschließlich von dem Karosserieteil (K) abgestützt werden kann.

6. Verkleidungsbaugruppe nach Anspruch 5, **dadurch gekennzeichnet, dass** die erste und die zweite Raumrichtung (z, -y; -z, -y) im Wesentlichen zueinander senkrecht verlaufen.

7. Verkleidungsbaugruppe nach einem der vorhergehenden Ansprüche, **dadurch gekennzeichnet, dass** die Aussparung (24) längserstreckt ausgebildet, insbesondere kanalförmig ist.

8. Verkleidungsbaugruppe nach einem der vorhergehenden Ansprüche, **dadurch gekennzeichnet, dass** das Führungselement (2) zur Anbringung an dem Karoserieteil (K) ausgebildet und vorgesehen ist.

9. Verkleidungsbaugruppe nach den Ansprüchen 4 und 8, **dadurch gekennzeichnet, dass** das Führungselement (2) zur Anbringung an einer Anlagefläche (KF) des Karosserieteils (K) ausgebildet und vorgesehen ist und zwar derart, dass sich das Führungselement (2) nach bestimmungsgemäßer Montage der Verkleidungsbaugruppe an der Anlagefläche (KF) abstützen kann und der Mitnehmer (1) bei einer Verstellung entlang des Führungselements (2) zumindest im Bereich der wenigstens einen Aussparung (24) über diese an derselben Anlagefläche (KF) an dem Karosserieteil (K) anliegen kann.

10. Verkleidungsbaugruppe nach einem der vorhergehenden Ansprüche 4 oder 5 bis 9, soweit rückbezogen auf den Anspruch 4, **dadurch gekennzeichnet, dass** das Führungselement (2) einen ersten Bereich mit der wenigstens einen Aussparung (24) und darüber hinaus wenigstens einen zweiten Bereich aufweist, in dem der Mitnehmer (1) an dem Führungselement (1) in einer Montageposition gehalten ist, bevor das Führungselement (1) an dem Karosserieteil (K) angebracht wird.

11. Verkleidungsbaugruppe nach einem der vorhergehenden Ansprüche 4 oder 5 bis 10, soweit rückbezogen auf den Anspruch 4, **dadurch gekennzeichnet, dass** der Mitnehmer (1) aus einem Kunststoffmaterial hergestellt ist und/oder das Karosserieteil (K) aus einem Metall hergestellt ist.

12. Verkleidungsbaugruppe nach einem der Ansprüche 1 bis 3, **dadurch gekennzeichnet, dass** das Verstellelement ein Umlenkelement, insbesondere eine Umlenkrolle ist, über die ein längserstrecktes Zugmittel umgelenkt wird, um einen entlang des Führungselements (2) verstellbaren und mit der Laderaumabdeckung verbindbaren Mitnehmer (1) zu verstellen.

13. Kraftfahrzeugbaugruppe mit einem Karosserieteil und mit einer Verkleidungsbaugruppe nach einem der Ansprüche 1 bis 12, wobei durch das Verkleidungsteil der Verkleidungsbaugruppe das Karosserieteil in Richtung eines Innenraums eines Kraftfahrzeugs zumindest teilweise verkleidet ist.

14. Kraftfahrzeugbaugruppe nach Anspruch 13, **dadurch gekennzeichnet, dass** das Verstellelement ein zur Verstellung der Laderaumabdeckung entlang des Führungselements (2) verstellbarer und mit der Laderaumabdeckung verbindbarer Mitnehmer (1) ist, und dass an dem Karosserieteil (K) eine Anlagefläche (KF) vorgesehen ist, an der der Mitnehmer (1) im Bereich der Aussparung (24) anliegen kann und entlang der der Mitnehmer (1) gleitend geführt ist.

15. Kraftfahrzeugbaugruppe nach Anspruch 14, **dadurch gekennzeichnet, dass** das Karosserieteil (K) wenigstens einen Anschlagabschnitt aufweist, an dem der Mitnehmer (1) anschlagen kann und der eine weitere Verstellbewegung des Mitnehmers (1) über den Anschlagabschnitt hinweg verhindert.

## Claims

1. Trim assembly for a motor vehicle, comprising
- a trim part (3) for covering a body part (K) of the motor vehicle,
- an adjusting element (1) which is part of a drive device (A) for opening and closing a luggage compartment cover of the motor vehicle, and
- a guide element (2) which predetermines a guide path for the luggage compartment cover and which is provided on the trim part (3),
wherein the adjusting element (1) is held on the guide element (2),
**characterized in that**
the guide element (2) has at least one opening (24) which, with the trim assembly mounted as intended on the body part (K), is open to the body part (K) and via which the adjusting element (1) can bear against and be supported on the body part (K) **in that** the adjusting element (1) is in direct contact with the body part (K) at least in the region of the opening (24).

2. Trim assembly according to Claim 1, **characterized in that** the opening (24) is dimensioned such that, with the trim assembly mounted as intended, the adjusting element (1) is supported exclusively by the body part (K) in the region of the opening (24) at least in one spatial direction (-y).

3. Trim assembly according to Claim 1 or 2, **characterized in that** the adjusting element (1) can be adjusted to open and close the luggage compartment cover.

4. Trim assembly according to Claim 3, **characterized in that** the adjusting element is a driver (1) which can be displaced along the guide element (2) to adjust the luggage compartment cover and can be connected to the luggage compartment cover, and **in that** the at least one opening (24) is formed on the guide element (2) in such a way that, after the trim assembly has been mounted as intended on the body part (K), the driver (1) can bear against the body part (K) at least in the region of the at least one opening (24) if the driver (1) is displaced as intended along the guide element (2).

5. Trim assembly according to Claims 2 and 4, **characterized in that** the guide element (2) is formed in such a way that the driver (1) is supported by the guide element (2) in the region of the at least one opening (24) at least in a first spatial direction (z; -z) and, after the trim assembly has been mounted as intended on the body part (K), can be supported exclusively by the body part (K) in a second spatial direction (-y) different therefrom.

6. Trim assembly according to Claim 5, **characterized in that** the first and the second spatial directions (z, -y; -z, -y) extend substantially perpendicular to one another.

7. Trim assembly according to one of the preceding claims, **characterized in that** the opening (24) is of elongate form, in particular channel-shaped.

8. Trim assembly according to one of the preceding claims, **characterized in that** the guide element (2) is designed and provided to be fitted to the body part (K).

9. Trim assembly according to Claims 4 and 8, **characterized in that** the guide element (2) is designed and provided to be fitted to a bearing surface (KF) of the body part (K), specifically in such a way that, after the trim assembly has been mounted as intended, the guide element (2) can be supported on the bearing surface (KF), and, during a displacement along the guide element (2), the driver (1) can bear against the same bearing surface (KF) on the body part (K) at least in the region of the at least one opening (24) via the latter.

10. Trim assembly according to one of the preceding Claims 4 or 5 to 9, if referring back to Claim 4, **characterized in that** the guide element (2) has a first region with the at least one opening (24) and, moreover, at least one second region in which the driver (1) is held on the guide element (1) in a mounting position before the guide element (1) is fitted to the body part (K).

11. Trim assembly according to one of the preceding Claims 4 or 5 to 10, if referring back to Claim 4, **characterized in that** the driver (1) is produced from a plastics material and/or the body part (K) is produced from a metal.

12. Trim assembly according to one of Claims 1 to 3, **characterized in that** the adjusting element is a deflection element, in particular a deflection roller, over which an elongate pulling means is deflected in order to displace a driver (1) which can be displaced along the guide element (2) and can be connected to the luggage compartment cover.

13. Motor vehicle assembly with a body part and with a trim assembly according to one of Claims 1 to 12, wherein the body part is at least partially covered in the direction of an interior of a motor vehicle by the trim part of the trim assembly.

14. Motor vehicle assembly according to Claim 13, **characterized in that** the adjusting element is a driver (1) which can be displaced along the guide element (2) to adjust the luggage compartment cover and can be connected to the luggage compartment cover and **in that** there is provided on the body part (K) a bearing surface (KF) against which the driver (1) can bear in the region of the opening (24) and along which the driver (1) is guided in a sliding manner.

15. Motor vehicle assembly according to Claim 14, **characterized in that** the body part (K) has at least one stop portion against which the driver (1) can abut and which prevents a further adjusting movement of the driver (1) beyond the stop portion.

## Revendications

1. Ensemble habillage pour un véhicule automobile, avec :
- une partie d'habillage (3) pour habiller une partie de carrosserie (K) du véhicule automobile ;
- un élément de déplacement (1) faisant partie d'un dispositif d'entraînement (A) pour l'ouverture et la fermeture d'un élément de recouvrement d'espace de rangement du véhicule automobile ; et
- un élément de guidage (2) indiquant une trajectoire de guidage pour l'élément de recouvrement d'espace de rangement et prévu au niveau de la partie d'habillage (3) ;
l'élément de déplacement (1) étant maintenu au niveau de l'élément de guidage (2) ;
**caractérisé en ce que** :
l'élément de guidage (2) comporte au moins un évidement (24) ouvert, lors du montage conforme à l'utilisation de l'ensemble habillage à la partie de carrosserie (K), en direction de la partie de carrosserie (K) et reposant, via l'élément de déplacement (1), contre la partie de carrosserie (K) et pouvant être maintenu contre elle en mettant l'élément de déplacement (1) directement en contact avec la partie de carrosserie (K) au moins dans la région de l'évidement (24).

2. Ensemble habillage selon la revendication 1, **caractérisé en ce que** l'évidement (24) est dimensionné de telle sorte que, lors du montage conforme à l'utilisation de l'ensemble habillage, l'élément de déplacement (1) est maintenu exclusivement par la partie de carrosserie (K) dans la région de l'évidement (24), au moins dans une direction dans l'espace (-y).

3. Ensemble habillage selon la revendication 1 ou 2, **caractérisé en ce que** l'élément de déplacement (1) peut être déplacé pour l'ouverture et la fermeture de l'élément de recouvrement d'espace de rangement.

4. Ensemble habillage selon la revendication 3, **caractérisé en ce que** l'élément de déplacement est un doigt d'entraînement (1) pouvant être déplacé pour déplacer l'élément de recouvrement d'espace de rangement le long de l'élément de guidage (2) et pouvant être relié à l'élément de recouvrement d'espace de rangement et que l'au moins un évidement (24) est réalisé de telle sorte au niveau de l'élément de guidage (2) que le doigt d'entraînement (1) peut reposer, après montage conforme à l'utilisation de l'ensemble habillage, contre la partie de carrosserie (K) au moins dans la région de l'au moins un évidement (24), contre la partie de carrosserie (K), lorsque le doigt d'entraînement (1) est déplacé conformément à l'utilisation le long de l'élément de guidage (2).

5. Ensemble habillage selon les revendications 2 et 4, **caractérisé en ce que** l'élément de guidage (2) est réalisé de telle sorte que le doigt d'entraînement (1) soit maintenu dans la région de l'au moins un évidement (24) au moins dans une première direction dans l'espace (z ; -z) par rapport à l'élément de guidage (2) et qu'il puisse être maintenu exclusivement par la partie de carrosserie (K) après montage conforme à l'utilisation de l'ensemble habillage à la partie de carrosserie (K), dans une deuxième direction dans l'espace (-y) différente.

6. Ensemble habillage selon la revendication 5, **caractérisé en ce que** la première et la deuxième direction dans l'espace (z, -y ; -z, -y) s'étendent pour l'essentiel perpendiculairement l'une par rapport à l'autre.

7. Ensemble habillage selon l'une quelconque des revendications précédentes, **caractérisé en ce que** l'évidement (24) est réalisé de façon à s'étendre dans le sens de la longueur, notamment en forme de canal.

8. Ensemble habillage selon l'une quelconque des revendications précédentes, **caractérisé en ce que** l'élément de guidage (2) est prévu et réalisé pour être placé contre la partie de carrosserie (K).

9. Ensemble habillage selon les revendications 4 et 8, **caractérisé en ce que** l'élément de guidage (2) est prévu et réalisé pour être placé contre une surface d'appui (KF) de la partie de carrosserie (K) et notamment de telle sorte que l'élément de guidage (2) puisse appuyer, après montage conforme à l'utilisation de l'ensemble habillage, contre la surface d'appui (KF) et que le doigt d'entraînement (1) puisse reposer, en cas de déplacement le long de l'élément de guidage (2) au moins dans la région de l'au moins un évidement (24), via celui-ci au niveau de la même surface d'appui (KF), contre la partie de carrosserie (K).

10. Ensemble habillage selon l'une quelconque des revendications précédentes 4 ou 5 à 9, en référence à la revendication 4, **caractérisé en ce que** l'élément de guidage (2) comporte une première région avec l'au moins un évidement (24) et en outre au moins une deuxième région dans laquelle le doigt d'entraînement (1) est maintenu contre l'élément de guidage (1) dans une position de montage avant que l'élément de guidage (1) soit placé contre la partie de carrosserie (K).

11. Ensemble habillage selon l'une quelconque des revendications précédentes 4 ou 5 à 10, en référence à la revendication 4, **caractérisé en ce que** le doigt d'entraînement (1) est fabriqué à partir d'une matière plastique et/ou que la partie de carrosserie (K) est fabriquée à partir d'un métal.

12. Ensemble habillage selon l'une quelconque des revendications 1 à 3, **caractérisé en ce que** l'élément de déplacement est un élément de déviation, notamment un rouleau de déviation via lequel un moyen de traction s'étendant dans le sens de la longueur est dévié, pour déplacer un doigt d'entraînement (1) pouvant être déplacé le long de l'élément de guidage (2) et être relié à l'élément de recouvrement d'espace de rangement.

13. Module de véhicule automobile avec une partie de carrosserie et avec un ensemble habillage selon l'une quelconque des revendications 1 à 12, la partie de carrosserie étant revêtue par la partie d'habillage de l'ensemble habillage au moins en partie en direction d'un espace intérieur d'un véhicule automobile.

14. Module de véhicule automobile selon la revendication 13, **caractérisé en ce que** l'élément de déplacement est un doigt d'entraînement (1) pouvant être déplacé pour déplacer l'élément de recouvrement d'espace de rangement le long de l'élément de guidage (2) et être relié à l'élément de recouvrement d'espace de rangement et qu'une surface d'appui (KF) est prévue au niveau de la partie de carrosserie (K) contre laquelle le doigt d'entraînement (1) peut reposer dans la région de l'évidement (24) et le long duquel le doigt d'entraînement (1) est guidé de façon glissante.

15. Module de véhicule automobile selon la revendication 14, **caractérisé en ce que** la partie de carrosserie (K) comporte au moins une section de butée contre laquelle le doigt d'entraînement (1) peut buter et entravant un mouvement de déplacement supplémentaire du doigt d'entraînement (1) au-delà de la section de butée.
